# EUROPEAN PATENT SPECIFICATION

(11) **EP 1 634 501 B1**
(45) Date of publication and mention of the grant of the patent: **06.12.2006**
(21) Application number: 05019476.0
(22) Date of filing: 07.09.2005
(51) Int. Cl.: A22C 13/00

(54) **Flavor release casing**
Überzug mit Geschmacksabgabe
Enrobage a liberation d'arome

(30) Priority: 10.09.2004 US 608667 P; 02.12.2004 US 632449 P
(43) Date of publication of application: 15.03.2006
(73) Proprietor: Viskase Companies, Inc., Willowbrook, IL 60527 (US)
(72) Inventor: Dinh-Sybeldon, Ann, Woodridge, IL 60517 (US); Gustafson, F. Edward, Oak Brook, IL 60521 (US)
(74) Representative: Gesthuysen, von Rohr & Eggert

(56) References cited:
- EP-A- 0 511 673
- EP-A- 1 197 150
- EP-A- 1 250 853
- US-A- 4 489 114
- US-A- 5 525 260
- US-A1- 2004 043 166

## Description

The present invention relates to shirred food casings containing oil-based flavorings on their interior surface. These casings are stuffed and cooked to produce foods such as sausages, whole muscle meat products, and cheeses flavored by the flavor-coated casings in which they were processed. The invention also relates to a method of manufacturing a variety of flavored foods, wherein the raw food material remains constant, is encased in a variety of flavor release casings, and processed, producing a variety of flavored foods.

Sausages are meat products that are salted and seasoned. The raw sausage mixture is encased in a tubular casing and then processed. The casings are used as processing molds, containers during handling and shipping, and in displays. Functionally, they must be strong enough to contain the meat used for the sausage and have shrink and stretch characteristics that allow the meat to contract and expand during processing and storage. Casings must also be able to withstand the forces incurred during linkage and closure. Some casings are known to allow the transfer of coloring and flavoring agents to the encased food, by the introduction of these agents from the outside of the casing through the casing wall or, during processing, by releasing the agents that are on or impregnated into the casing wall to the encased food product.

In the preparation of some sausages, chunks of meat are ground to form uniform sized cylinders of fat and lean meat. This is then cut to extremely small sizes and made into a uniform blend, which is later mixed with other ingredients such as salt, sugar and spices. Other sausages are prepared using coarsely ground meat, which is mixed and then blended with the same additional additives. Another technique which combines grinding and chopping is emulsification. This produces a doughy product which is, as above, combined with the proper additives and spices, and then stuffed into the casing.

One of the most popular additives used in sausage and meat processing is a coloring and flavoring agent known as liquid smoke. Liquid smoke has been extensively used to add an aromatic, smoky flavor to all types of meats. One way of adding a smoky flavor and color to meats is to add liquid smoke flavoring directly to the meat. Another is to shower the casing-encased meat during processing. The liquid smoke will then penetrate the casing to flavor the encased meat. A third method of flavoring and coloring sausages with liquid smoke is to apply the liquid smoke to the interior of the casing prior to stuffing it with meat. See US 5,030,464 to Hansen, July 9, 1991.

Other very important flavoring additives are spices. The meat industry is believed to be the biggest user of spices. Either whole or chopped natural spices or the oils and oleoresins extracted from them are used in the preparation of sausages, directly added to the meat preparation to flavor the finished sausage. Each type of sausage entails the use of very specific spice or flavoring blends. Some manufacturers use the same basic meat emulsion or blend for many varieties of sausages they produce, but must make a new batch of the meat emulsion for each different spice formulation. For example, although the meats used to produce Polish sausage and Italian sausage may be the same or very similar, the spices are quite different. With every change of meat batches to make different types of sausages, comes the need to wash equipment solely to avoid contaminating one batch of meat with the flavorings of the previous batch. This causes a slow-down in production and introduces another place where contamination of the meat could occur. It would be of benefit to the sausage industry if a variety of sausages could be made using one standard meat blend, and the flavorings were introduced after introducing the meat into the casing, so that reformulation of the meat of each sausage type would not have to be done, thereby eliminating cleaning of equipment and downtime.

In contrast, whole muscle meats have their surfaces dry rubbed with spice mixtures, or are marinated in a flavored marinade, or have the spices sprayed or applied on the surface in some manner, prior to the cooking and processing of the meats, whether or not encased in a casing or bag of some sort. For both muscle meats and sausages, the amount of spice needed to adequately flavor the meat product is substantial.

Spices are a substantial cost in the production of sausages and processed meats, partially because of the large quantities needed to flavor the whole mass of meat, as in sausages, or because of the large amounts used in rubs and coatings of whole muscle meats. Additionally, there are also health issues that must be handled from the exposure of the workforce to large amounts of raw spices and spice extracts, particularly when they are added to the meat mixture being prepared and when the manufacturing equipment is being cleaned and aerosolization of the spices can and does occur.

Food casings used in the processed food industry are generally thin-walled tubing of various diameters, typically prepared from cellulose, collagen, thermoplastics, or animal intestines. They may be made as films and formed into tubes or bags, or they may be generated as tubes. They may be mono- or multi-layered. Although whole muscle meats and some cheeses are processed in casings, in general, food casings are stuffed with sausage meats. Then, the encased food is thermally processed and in the preparation of "skinless sausages" the casing enclosing the processed meat is removed prior to final packaging. Skinless sausages are generally processed in nonfiber-reinforced ("nonfibrous") cellulose casing. Nonfibrous is most commonly understood in the art to refer to casings without a paper or a previously bonded fiber reinforcement. Nonfibrous casings are typically used to process small diameter skinless sausages, including polish sausages, wieners, or frankfurters. In contrast, larger diameter sausages such as salami are frequently sold with the casing left on. But, there is also a trend to peel off the casing from larger sausages. These larger diameter sausages are usually encased in fiber-reinforced ("fibrous") cellulosic or nylon casing, although large sized nonfibrous casing can be made into bags which encase whole muscle meats.

In one well-known method of manufacturing nonfibrous cellulose sausage casings, viscose is typically extruded through an annular die into a coagulating and regenerating bath to produce a tube of regenerated cellulose. A film may also be produced by various well known methods, including extruding a tube and after processing, slitting it and then reforming it into a tube by a back-seaming method. In another well-known method, cellulose is dissolved by a tertiary amine oxide and later, the cellulose is precipitated to form a film or filament. The tubes are subsequently washed, plasticized, e.g., with glycerine, and dried by inflation under substantial air pressure. After drying, the casing is wound on reels. Oil is sprayed on the outside of the casing to facilitate shirring (or compacting). The casing is subsequently shirred on high-speed shirring machines. Spraying a mist of water and lubricant through the shirring mandrel is done to lubricate and internally humidify cellulose casings during the shirring process. This is an economical, fast and convenient way to lubricate and/or humidify the casing to increase the flexibility of the casing and facilitate high speed shirring without sticking, tearing or breaking the casing. Nonfibrous cellulosic casings are typically humidified to a level sufficient to allow the casing to be shirred without undue breakage from brittleness, yet must be at a level low enough to prevent sticking of the casing to the shirring equipment, e.g., the mandrel, during the shirring operation. Often a humectant is used to moderate the rate of moisture take-up and casing swelling, producing a casing that during the shirring operation has sufficient flexibility without undue swelling or stickiness. Typically, a lubricant such as an oil will also be used to facilitate passage of the casing through the shirring equipment, e.g. over a shirring mandrel. However, the presence of too much oil can cause shirred sticks to lose their tight coherency and the pleats become loose, thereby making the sticks limp and loosely compacted, making the sticks useless on high speed stuffing equipment.

Additional components, such as coloring agents, may be added to the shirring solution, and thereby be introduced into the interior of the casing in a consistent and uniform manner. Slugging may also be used to introduce elements to the interior of a casing, and is described in US 3,378,379 to Shiner et al., issued Apr. 16, 1968.

In the shirring process, lengths of from about 40 to about 200 or more feet of casing are pleated and compacted into very cohesive tubular sticks of between about 4 and about 30 inches. These shirred casing sticks are packaged and provided to the meat processor who typically places the stick on a stuffing horn, and shoots meat through the horn into the casing, thereby deshirring the casing sticks at extremely high speeds while stuffing them with the meat. The meat can be subsequently cooked or pasteurized and the casing removed from the meat processed therein with high-speed peeling machines.

Production of casing is well-known in the art and the present invention may utilize such well known processes and casings.

In the formation of skinless frankfurters, where the casing is removed after processing, sausage proteins coagulate, particularly at the sausage surface, to produce a skin and allow formation of a liquid layer between this formed skin and the casing. Desirably, this secondary skin will be smooth and cover the surface of the frankfurter. Formation of a liquid layer between the casing and the frankfurter skin facilitates peeling/release of the casing and relates to the meat emulsion formulation, percent relative humidity during the cooking environment, subsequent showering, and steam application to the chilled frankfurter.

Also, the application of peeling aids or release coatings has helped to overcome peelability problems associated with process variables. Following cooking, cooling and hydrating, peeling aids such as water-soluble cellulose ethers help release the casing from the frankfurter skin by formation of a peeling enhancing layer between the casing and the frankfurter skin. See Chiu, US 3,898,348, issued Sept. 21, 1976.

Coloring agents have also been used in the production of sausages and cheeses. For example, sausages have been colored by smoking with gaseous or liquid wood smoke, by dipping peeled sausages into a vat containing a colorant, by spraying or dipping encased sausages with a casing permeable liquid dye, and also by stuffing sausage meat into casings having their interior surfaces coated with a transferable colorant. Use of self-coloring cellulosic casings made with synthetic colorants was approved by the United States Department of Agriculture in 1947 and such casings have been commercially available since 1948.

Various patents disclose coloring or flavor compositions including compositions that contain annatto, norbixin or bixin. For example, US patent 5,955,126 discloses the use of a bixin colorant composition wherein the bixin is contained in a water-soluble film-forming agent, and is applied as an internal colorant on shirred casings, providing a red color to sausages processed inside these casings.

Such self-coloring casings are well-known in the art. These casings are designed to transfer color to the sausage surface. Such casings are generally either coated or impregnated with food grade water-soluble dyes. Also, liquid smoke impregnated casings are known to transfer liquid smoke to the surface of sausages encased therein, transferring flavor or coloring and also causing a browning reaction on the sausage surface during the thermal processing.

The majority of work done using casing as a way to effect change to the encased product has been in the areas of liquid smoke and transferable colors. Casing that transfers natural antibacterials has also been discovered, as seen in US 5,573,797, US 5,573,800, and US 5,573,801, issued on Nov. 12, 1996 to Wilhoit et al.

PCT Publication No. WO 91/03917 published in 1991 discloses a microwavable container having a coating of a transferable browning agent such as annatto. This disclosure states that the browning agent may be applied in microwave transparent material in an aqueous binder. The microwave transparent material purportedly may be any food grade plastic or cardboard material known for use in microwave containers. Suitable aqueous binders are said to include gelatin, starch, starch derivatives, gums and fat based binders such as palm kernel oil. It is further suggested that other additives may be present in the coating including flavorings, such as sweeteners, and emulsifiers, such as lecithin, to facilitate dispersion.

Orange to orange-red sausages are made using self-coloring casings dyed with synthetic colorants such as coal tar dyes that have been approved by government regulation for use on food. These dyes, which are typically known as FD & C dyes, are typically applied to cellulosic casings by dipping semi-solid, or "gel stock" casing into a tank containing an aqueous mixture of glycerine and the FD & C dyes. A combination of water-soluble red and yellow FD & C colorants produce an orange color. When gel stock is dipped into them, these colorants permeate and migrate through the exterior of the gel stock into the interior surface. The gel stock casing is then dried, forming semifinished casing. Semifinished casing may be shirred directly in a continuous operation from the gel stock casing or it may be wound on reels and subsequently formed into shirred sticks and used conventionally.

One problem seen with FD & C dyes is that they have a tendency to penetrate into the sausage and migrate away from the surface towards the center of the sausage. However, the ultimate consumer prefers that only the coagulated proteinaceous surface skin be colored, and not the interior of the sausage.

Liquid smoke may be added directly to meat emulsions used to make sausages. However, casing encased sausages are typically dipped or sprayed with a liquid smoke solution prior to cooking the links. The water-soluble liquid smoke easily passes through the walls of the casing, thereby coming into contact with the precooked sausage meat or emulsion. It is also known in the art that self-coloring casings, generally fibrous, but also to a smaller degree, nonfibrous casing, coated with liquid smoke on its food-contacting interior surface, are commercially available. When these casings are stuffed, no further application of liquid smoke is needed to produce a smoky, reddish-colored sausage after processing.

An objective of this invention is to provide a means whereby food manufacturers, and in particular sausage manufacturers, can use one standard raw ingredient mixture, such as one ground meat mixture, while producing a variety of differently flavored final products, thereby reducing or eliminating the need for reformulated raw ingredients for different products. By limiting themselves to the use of one standard raw ingredient mixture, savings will be realized because of less down time of high speed equipment due to reducing or eliminating the need to stop the equipment for cleaning and changing over to other raw ingredient procedures.

Another objective of this invention is to deliver flavorings to food products encased and processed in casing in a more efficient and cost-efficient manner.

Another objective is to overcome coherency problems of shirred nonfibrous cellulose casings produced when using oil-based flavorants on the interior of such casings.

Thus, the present invention relates to a food casing as defined in claim 1. Further embodiments of the inventive food casings are subject-matter of the respective sub-claims.

Furthermore, the present invention relates to a process as defined in claim 15 for producing foodstuffs having multiple flavors as well as to the foodstuff products produced in this way. Further embodiments of the inventive process are subject-matter of the respective sub-claim.

Further, the present invention also relates to the use of the food casings of the present for transferring a flavor to a foodstuff surface and/or for providing a foodstuff with a flavor by contacting said foodstuff surface with the internal surface of said food casings.

Finally, the present invention concerns a foodstuff article, said foodstuff article being packaged in a food casing of the present invention.

The present invention is a flavor releasing casing comprising a shirred food casing containing a transferable oil-based flavorant coating composition on its food-contacting surface. This coating is a composition of at least one concentrated spice extract oil (or a blend of various concentrated natural spice extract oils) and may optionally be mixed with flavoring agents that do not originate from spices, such as sweeteners or water-based flavors, and at least one peeling aid, such as a starch or a high molecular weight, water absorbing cellulose ether in concentrations greater than those found in standard casings that do not contain oil-based flavorants. The amount of the concentrated spice extract oil composition needed to flavor an encased meat or foodstuff using the inventive casing is considerably less than the amount needed when the natural spices are added directly to meat or the meat emulsions.

The flavorant coating composition of the present invention is introduced to the inner food-contacting surface of the casing using conventional means such as shirring or slugging, in an amount sufficient to provide a flavor releasing casing that transfers such flavor to the encased foodstuffs during processing of the foodstuff, while retaining the coherency of the shirred casing prior to stuffing.

The shirrable casings may be large or small diameter, monolayer or multilayer, nonfibrous cellulosic, collagen, or barrier casings which are coated with at least one layer of a nylon or plastic while having an absorbent interior, food contacting layer.

The present invention seeks to improve the manufacturing process of producing foodstuffs encased in casings by providing the inventive flavor releasing casings, to produce foodstuffs that are flavored by the inventive oil-based casing coating, all while using current high-speed manufacturing practices. By using a variety of flavor releasing casings, the manufacturer is able to use one basic meat emulsion to produce a number of different products. For example, by stuffing hot pepper flavored casing, onion flavored casing, and southwest-ern flavored casing with the same meat emulsion, sausages having the distinct flavors derived from the casing are produced. The inventive casing may also be used to produce flavor-enhanced meat-substitute products, such as those manufactured using processed vegetables and/or soybeans.

The flavorant composition of the present invention for use on the food-contacting surface of a shirred food casing comprises the oil-based flavorant described above, which is preferably dispersed or emulsified with a food grade emulsifier to make it easily miscible with aqueous shirring solutions, and additionally has at least one starch or a high molecular weight polymer that is water absorbing and has the property of being adhesive, such as cellulose ethers, and particularly carboxymethyl cellulose ("CMC"), in a concentration that is greater than that found in standard, nonfibrous casing.

The flavorant composition may also include other components that are well known as components of the shirring or slugging solution into which is combined, such as water, small amounts of surfactants (less than 10 % of the coating weight), glycerine may be added to the composition as a humectant, emulsifiers such as lecithin, antimycotics, and lubricants.

It has unexpectedly been discovered by the present inventors that when spices and other flavorings are present only on the surface layer of a food product, such as a sausage, the flavor is perceived by the consumer to be found throughout the sausage. Therefore, even though the flavor appears to be tasted throughout the product, less flavorant is needed to flavor processed food stuffs because the flavorant only needs to be present on the skin, or outer surface, of the food product. The present invention of a flavor transferring casing provides this enhancement to a product at a cost substantially reduced from current flavoring costs.

The invention is a novel flavor-transferring shirred food casing having a coating on its internal food-contact surface comprising a mixture of at least one concentrated oil-based spice extract oil and at least one peeling aid, such as a starch or a cellulose ether in concentrations greater than those found in standard shirring solutions used in casings not containing oil-based flavorants ("f flavorant").

It is also a process to manufacture multiple types of sausages or meats by preparing one raw material formulation; providing multiple flavor transferring food casings of the present invention, each flavored differently from the other; stuffing this raw material formulation into these multiple types of casings; and further thermally processing the encased sausage meat. (For ease of discussion, the terms "sausage" and "sausage meat" will be used, but it is understood that the invention applies to all types of food stuffs that may be processed in casings.) The sausage meat processed within the casing comes in contact with the inventive flavorant coated inner surface of the flavor-releasing casing, and during processing, the flavorant is transferred to the surface of the encased sausage. During processing of the foodstuffs, high cooking temperatures and the presence of moisture both help to release the flavorant from the casing wall so that it contacts the sausage surface, thereby imparting the desired flavor to the sausage.

The inventive casing is particularly useful as shirred, small diameter, nonfibrous, cellulose casings that are used for processing foodstuffs, such as sausages made of emulsified meat; of coarsely ground meat, such as polish sausage, cotto salami, kielbasa, and bierwurst; and also of meat-substitute sausages, such as those made with processed beans or processed soybeans. The inventive flavorant coating transfers to the foodstuff surface during processing to a degree sufficient to impart flavor to the foodstuff. After being cooked in the inventive casings, encased links may be mechanically peeled, leaving a skinless sausage that is uniformly coated with the flavorant that has transferred from the inner wall of the inventive casing.

Casings may be made of any suitable material, including monolayer or multilayer, large or small diameter, seamless or seamed tubular films of nonfibrous cellulose or collagen, but preferably comprises shirred, peelable, nonfibrous cellulosic casings. Barrier casings, such as nylon or plastic coated multilayer cellulose casings may also be employed, such as PVDC coated nonfibrous cellulosic casing. The barrier coating is only found on non-food contact layers of the casing. In all casing embodiments, the internal food contact surface must be absorbent, that is, able to hold or retain the flavoring composition, i.e., as seen in 100 % cellulosic casing or as having only an inner layer made of cellulosic material in a multilayer casing, and wherein the outer layers contain oxygen and moisture barrier materials. The food casings of the present invention may be prepared from tubular or flat cellulosic, nonfibrous films, e.g., from regenerated or dissolved cellulose, as is well known in the art, or alternatively from collagen.

The manufacture of such casings is well known in the art and one of ordinary skill is aware of the common variations in such parameters as moisture content, type and amounts of additives such as plasticizers, antimycotics, antioxidants, etc. Tubular casings are typically gathered into shirred sticks using well known processes and equipment and as previously described. Flat stock may be formed into tubes by joining the edges together. During the shirring operation it is common to coat the inner surface of a tubular casing by spraying it with a "shirr solution" that may contain ingredients such as anti-pleat lock agents, lubricants, surfactants, peeling aids, water and/or humectants. Some of these components may serve multiple functions. For example, when lecithin or mineral oil is used, these materials may act as anti-pleat lock agents and as lubricants to facilitate travel of the casing over a shirring mandrel when the casing is being shirred or over a stuffing horn when it is being stuffed with meat. Coating the interior of a casing with a shirr solution is done to facilitate shirring of the casing and to form easily deshirrable, self-sustaining sticks of shirred casing that are adapted for stuffing with food stuffs, particularly emulsions that form sausages.

These casings are coated with the inventive flavorant solution in accordance with any of the well known commercial methods of applying a coating composition to the internal surface thereof. The coating composition components are described below.

The oil-based flavorant component of the interior coating of the inventive casing is a composition that contains at least one concentrated spice extract oil which may be combined with non-spice flavoring agents, such as salt, sugar, or water-based flavorings such as maple or liquid smoke. Spices are aromatic substances derived from plants or herbs. Various parts of these plants are used to produce different spices, such as cloves from the flower bud, nutmeg and pepper from the fruit, cinnamon from tree bark, and cardamom, coriander, and mustard from seeds.

The aromatic properties of spices are found in the volatile oils and oleoresins (which are the oils combined with plant resins). Spices that are used particularly in the meat industry include black pepper, allspice, basil, bay leaf, cardamom, cloves, ginger, mace, garlic, nutmeg, mustard, paprika, pimento, cayenne pepper, white pepper, caraway, coriander, celery seed, cumin, marjoram, thyme, savory, sage, anise, cinnamon, capsicum, onion, garlic, sesame, and fennel. In the current market, popular flavors include those with a jalapeno pepper note, an onion flavor, a garlic flavor, and a tomato-jalapeno-onion flavor. Specific flavors are often a mixture of various spices that may include non-spice components, such as honey or maple flavors. Flavor mixtures or individual spices may be purchased from a number of purveyors of both the individual spice and the mixtures. Flavors can also be obtained in different concentrations. These mixtures and concentrations are kept as trade secrets by their developers. However, the more concentrated the flavor composition is, the less of it may be needed in the coating formulation. Low concentrations of flavoring compositions put on the surface of processed meats were found to leave either no flavor or a very muted flavor. We have discovered that many of the above spice extract oils must be concentrated substantially above levels currently used in industry. At times, and depending on the particular spices used, the concentration is up to 5 times more concentrated that that found in standard available spice oils. For other flavors, merely doubling the concentration of readily available spice oil formulations will produce the desired taste. By so concentrating the extracts, the level of oil increases above that found in nonconcentrated spice extracts.

In the present invention, the concentrated oil-based flavorant is made into a dispersion or emulsion in a number of ways, mechanically, by mixing or by combining it with food grade emulsifiers, such as lecithin, polysorbate, poly-glycerides, polyhydric alcohol surfactants or any combination thereof, so that it may be miscible with the aqueous shirring solution, which is use to coat the interior wall of the casing. Slugging, a method where an aqueous coating solution is introduced to the interior of a casing without spraying, is another way of treating the interior of the casing with the emulsified or dispersed aqueous flavorant-containing coating solution. Slugging may be used when a flavorant, such as pepper flakes, has a particle size larger than is allowable in a shirr solution, which must pass through a spray nozzle.

It has been discovered that the water miscible oil-based flavorant, even when combined with an aqueous system, is not amenable to migrating through the casing after being applied to the exterior of the casing. Although the molecular weight of the aromatic fraction of spices runs the gamut from low to high, it has unexpectedly been discovered that molecular weight is not the deciding factor in the migration of the spice through the casing. It has been found that very low molecular weight spices do not migrate through the casing walls, contrary to the hypothesis that, based on size alone, migration should have occurred.

The spice's oil which is inherent in the oil-based flavorant composition is believed to promote the uniform spreading of the flavorant on the casing surface and enhance uniformity of flavor transfer to the sausage surface. However, it is well known that excessive oil (about 10 % or more of the total shirring solution) has a deleterious effect on shirred casing stick coherency. Another factor causing coherency problems is seen because a dispersion or emulsion is made by mechanically mixing the oil-based flavorants into the aqueous shirring solution with the use of relatively high surfactant or emulsifier levels. Unfortunately, this also results in low coherence of the casing stick. When the pleating on the stick begins to come apart, the stick is not useable on high speed casing stuffing machines. The integrity or coherency of the stick must be maintained under current manufacturing conditions. To avoid these types of coherency problems, the total oil content of the shirr solution sprayed or slugged onto standard, commercially available nonfibrous, peelable casings not of the invention is generally present in an amount less than about 10 % by weight ("wt.%"), and more preferably in an amount less than about 8 wt.%, and most preferably in an amount from about 1 wt.% to about 5 wt.%. In the present invention, the amount of oil can be substantially higher, from about 10 wt.% to about approximately 80 wt.% of the total shirring solution, or more preferably, from about 10 wt.% to about 50 wt.%, as long as it is balanced by the appropriate peeling aid, such as a cellulose ether. Additionally, a reduced amount of moisture in the finished casing can be helpful in promoting the coherency of the shirred casing sticks of the present invention.

Glycerine may also be present in widely varying amounts. Glycerine may be provided in an amount from 0 to 5 % or more based upon the weight of the shirring solution.

Peeling agents must be added to the internal coating of the casing of the present invention, and preferably incorporated into the shirring and/or slugging solutions. Preferred peeling aids are edible, high molecular weight, water-soluble cellulose ethers. Suitable cellulose ethers that may be employed are the non-ionic, water-soluble, alkyl and hydroxyalkyl cellulose ethers such as, for example, methylcellulose, hydroxypropyl methylcellulose, hydroxypropylcellulose, ethyl methylcellulose, hydroxyethylcellulose and ethyl hydroxyethylcellulose and the anionic water-soluble cellulose ethers such as, for example, carboxymethylcellulose ("CMC") and carboxymethyl hydroxyethylcellulose. Commercially, CMC and carboxymethylhydroxyethyl-cellulose are almost always sold as the sodium salt, and it is well-established trade practice not to refer to the commercial product as the sodium salt. For the purpose of this application, reference to these anionic materials shall include salts thereof. Other peeling aids that may be needed to allow other types of casings, such as those containing a polymer or nylon layer, may also be used.

The concentration of water-soluble peeling aids, and in particular, cellulose ethers present on the internal surface of the food casing can vary over a wide range, although very small quantities are actually required. In the present invention, these compounds are used in a manner directly opposite from that usually thought of - that is, as a "gluing agent" instead of a "easy peeling" agent. Generally, and as is well known, in low concentrations of 0.03 to 0.05 mg./in² they are important in providing a surface to the casing that allows for the easy release of the casing from the sausage cooked within it (Chiu, US 3,898,348). In casings not of the invention, higher concentrations of cellulose ethers act as a glue, keeping the pleats of the shirred casing stuck together, resulting in stick breakage when being deshirred and stuffed with meat. This is not a desired property in casing sticks, because the stick needs to deshirr rapidly as the sausage emulsion is fed into the casing on the high speed, mechanical stuffer. Pleats that are stuck together cause the sticks to stay pleated instead of coming apart easily when stuffed. In the present invention however, higher than generally used amounts of peeling aids, in particular cellulose ethers, and most particularly CMC, are used to counteract the cohesive-destroying effect brought about by the high levels of both the oil present in the flavorants and the surfactants/emulsifiers that may be needed in the shirr solution. The adhesive effect of the peeling aid, assisted in some cases with lower moisture levels in the finished casing, are needed to maintain the coherency of the oil based flavorant-impregnated shirred casing sticks. Cellulosic casings of the present invention, when containing from about 15 wt.. % up to about 90 wt.% oil in the shirring solution, will contain from about 0.07 to about 0.20 mg. of cellulose ether derivative/in² of casing surface, and preferably between from about 0.09 to about 0.14 mg./in² of said cellulose ether derivative. Greater amounts of the cellulose ether component may be used, if desired, although generally it will not materially improve the release characteristics of the casing. It is also believed that the use of starch either alone or in combination with cellulose ethers or other peeling aids, will produce coherent sticks of casing when the shirring solution contains the same high concentrations of oil.

Another component of the peeling aid composition may be a food grade wax. The preferred embodiment of the present invention uses a camauba wax dispersion, a wax well known in the art, in concentrations of from about 5 mg./100 in² to about 60 mg./100 in² of coated casing surface. A particularly preferred concentration of carnauba wax dispersion is from 8 mg./100 in² to about 30 mg./100 in² of coating casing surface. (The use herein of "mg/100in^{2"} always refers to mg of the component being measured per 100 square inches of casing.)

Surfactants, such as a phospholipid in the form of lecithin, may also act as flavor stabilizers, promotes uniformity of the flavor transfer, and act as release agents for peelability. Such surfactants may be present in amounts from 0 to 1 wt.% or more based upon the weight of the flavorant coating composition. However, in the present invention, the use of surfactants will generally not be needed.

Other surfactants suitable for use in the coating compositions of the present invention include those surfactants which act as wetting agents for the cellulosic casing surface and/or as emulsifying agents for the coating composition. This may also include shirring lubricants. Nonlimiting examples of suitable surfactants include water dispersible or at least partially water-soluble surfactants such as alkylene oxide adducts of either fatty acids or partial fatty acid esters, for example, ethoxylated fatty acid partial esters of such polyols as anhydrosorbitols, glycerol, polyglycerol, pentaerythritol, and glucosides, as well as ethoxylated monodiglycerides, sorbitan trioleate, lecithin, and aliphatic polyoxyethylene ethers such as polyoxyethylene (23) lauryl ether.

Preferred surfactants include polyoxyethylene sorbitan fatty acid esters or mixtures thereof such as those sold under the trademark Tween™ such as Tween™ 20 (polyoxyethylene (20) sorbitan monolaurate) or Tween™ 80 (polyoxyethylene 20 sorbitan monooleate) (both commercially available from ICI Americas Inc. of Wilmington, Delaware), ethoxylated monodiglycerides or mixtures thereof such as those sold under the trademark Mazol 80 MG K (commercially available from Mazer Chemical, Inc. of Gurnee, Illinois), sorbitan trioleate (commercially available from ICI Americas Inc. under the trademark Span 85), and phospholipid including lecithin. An especially preferred surfactant is a mixture of ethoxylated monodiglycerides such as Mazol 80 MG K. Some surfactants are also known to act as anti-pleat lock. Suitable amounts of a surfactant, such as a mixture of ethoxylated monodiglycerides (Mazol 80) (sold under the trademark Mazol 80 MGK by Mazer Chemicals, Inc. of Gurnee, Illinois, USA), may be present on the inner surface of the casing in order to wet the casing surface and assist in dispersing the antipleat lock agent, especially oils, and to emulsify and/or stabilize peeling aid compositions which contain components of varying solubilities. Desirably, amounts of a surfactant may range from about 0.005 to about 0.06 mg/in² (0.0008-0.0009 mg/cm²) and preferably for a surfactant of ethoxylated monodiglycerides such as Mazol 80 from about 0.01 to 0.02 mg/in² (0.002-0.003 mg/cm²). Too little surfactant may lead to an uneven distribution of the coating composition on the casing surface and with increased surfactant any additional benefits are believed to be reduced in significance relative to the added cost or possible deleterious effect on shirred stick properties such as coherency, deshirring forces and straightness of the shirred stick.

Addition of water to casing acts as a plasticizer that facilitates the shirring operation where tubular casing is passed over a shirring mandrel during the shirring operation. The water is added as a part of the shirring solution and sprayed onto the interior of the casing while is being shirred.

It is advantageous to avoid application of more coating composition than can be imbibed by the casing in order to prevent excess coating composition from being lost and wasted or from accumulating in localized areas of the shirred sticks with resulting detrimental effects thereto, such as leaving a "pleat mark" on the processed sausages. Generally, in non-inventive casings, not more than about 10 mg/in² (1.55 mg/cm²) of total aqueous based coatings should be applied to the internal surface of the tubular, nonfibrous, cellulosic casing. The application of the total coating compositions should be further controlled so that less than about 3 mg/in² (0.47 mg/cm²) of water is applied to the surface of this casing. Generally, small diameter cellulosic casing after shirring should have a suitable moisture content of preferably from about 25 to about 35 wt.% based on bone dry cellulose. The term "bone dry cellulose" of "BDC" as used herein refers to cellulose such as regenerated, derivatized or nonderivatized cellulose and/or paper which has been dried by heating the cellulose in a convection oven at 160 °C for one hour to remove water moisture. In the formation of cellulosic casing an extruded cellulosic film forms what is known as gel stock casing having a high moisture content in excess of 100 wt.% BDC. This gel stock casing is unsuitable for stuffing with food such as meat emulsion, e.g. to form sausages, because it has insufficient strength to maintain control of stuffing diameter and prevent casing failure due to bursting while under normal stuffing pressure. Gel stock casing is typically dried to a moisture level well below 100 wt.% BDC which causes the cellulose to become more dense with increased intermolecular bonding (increased hydrogen bonding). The moisture level of this dried casing may be adjusted, e.g., by remoisturization, to facilitate stuffing. Such remoisturization or moisture adjustment, e.g., by drying to a specific level, for nonfibrous casing is typically to a level with a range of from about 5 to about 40 wt.% BDC. Small diameter nonfibrous casing, prior to shirring, will have a typical moisture content of about 10-20 wt.% BDC, and such small diameter nonfibrous casing when shirred will have a moisture content that has been adjusted to between about 20 to 40 wt.% BDC.

Casing brittleness increases with decreasing moisture content and the tendency to produce curved, nonuniform and/or swollen shirred sticks subject to post-shirring elongation increases with higher moisture levels. However, for the present invention, the amount of moisture from water must be reduced in order to maintain a coherent shirred stick. Levels below 31 wt.% of BDC have been found acceptable when combined with increased levels of peeling aid, resulting in shirred casing sticks that maintain their coherency, do not swell and do not elongate to commercially unacceptable levels.

For the present invention, the flavorant composition may be sprayed on the inner surface of the casing, preferably in combination with a shirring solution having a peeling aid in an amount greater than that used in shirred casings not having an oil-based flavorant component. Casings also may be coated by other well-known means such as slugging. Surprisingly, it has been found that the oil-based flavorants used in the present invention generally do not migrate through the casing wall in more than a miniscule amount, and therefore it is not possible to apply the flavorant to the casing to the outside of the casing and find that it migrates internally to impart its flavor to the encased sausage. Application of the other additives and coating compositions via solution spraying is convenient, economical and facilitates placement of a regular measured distribution of the coating on the casing surface.

It is envisioned by the inventors that a benefit of the flavor release casing will be the ability of sausage manufacturers to make a single batch of raw sausage material and by introducing this raw material into a variety of flavor release casings, each having different flavors, and processing the encased food stuffs. In this way, a variety of flavored sausages could be produced, all without the need to add spices to the raw meat mixture, thereby eliminating safety hazards involving the handling of large amounts of spices, the cleaning of equipment during a production run and eliminating the resulting downtime, and providing a uniform and consistent taste to the sausages cooked in flavored casings, as a known amount of flavor will be uniformly cooked onto the surface of the sausages.

Specifically, a process for producing foodstuffs having multiple flavors comprises providing a raw foodstuff for processing; delivering a first flavor-releasing food casing having an internal coating comprising, in an amount effective to flavor the outer surface of said foodstuff upon encasing and processing, an aqueous emulsion or dispersion of at least one concentrated spice extract oil and a peeling aid in a concentration to produce a coherent shirred casing stick; stuffing said foodstuff into said first food casing; delivering a second flavor-releasing food casing having an internal coating comprising, in an amount effective to flavor the outer surface of said foodstuff upon encasing and processing, an aqueous emulsion or dispersion of at least one concentrated spice extract oil that provides a different flavor than does the first flavor and a peeling aid in a concentration to produce a coherent shirred casing stick; and stuffing said foodstuff into the second flavor-releasing food casing. Both encased foodstuffs may then be processed by cooking or pasteurizing and optionally, the casings may be removed from the resulting uniformly flavored foodstuff, thereby producing multiple flavored foodstuffs, such as multiple flavored sausages. Additionally an unlimited number of differently flavored releasing casings could be used in this manufacturing process, all being stuffed with the same raw foodstuff and thermally processed, resulting in as many different kinds of flavored foodstuffs as there were flavor releasing casings.

Further modifications of the invention disclosed will be apparent to those skilled in the art and all such modifications are deemed to be within the scope of the invention as defined by the following claims.

Further embodiments, aspects, variations and advantages of the present invention will be understood by the skilled practitioner when reading the description, without him leaving the scope of the present invention.

The present invention will be illustrated by the following examples which, however, do not limit the present invention. For the following examples it is noted that 1 in² equals 6,45 cm².

### Example 1- Standard CMC Flavor Release Casing Test

Nonfibrous, small diameter, cellulose casings, marketed under the trademark Nojax^{®} Casing by Viskase Corporation, of Willowbrook, Illinois, USA were internally coated with a shirring solution containing concentrated oil-based flavorants. EZ Peel Nojax^{®} was the comparison control.

The test sample casings S1 and S2 were coated by spraying the internal surface of the Nojax^{®} casing with standard shirring formulations having the modifications described. The control EZ Peel Nojax^{®} comparison is provided to show the shirring solution used for a non-flavored, commercially available, peelable, nonfibrous casing.

Samples 1 and 2 were coated with standard shirring solutions that resulted in the same moisture composition when sprayed on the casing wall as did the comparison, EZ Peel Nojax^{®}, but contained slightly more than twice the amount of CMC as the EZ Peel Nojax^{®}. The Grillin Chefs Grill flavor obtained from Red Arrow is a savory grill flavor with a meaty impression, derived from a 100 % chicken fat base, was provided in a form 4 times as concentrated as the standard flavoring. Sample 1 had a loading of 350 mg/100in² of Grillin Chefs Grill flavor, and Sample 2 had a loading of 231 mg/100in² of the same flavor, while the EZ Peel Nojax samples had no flavoring. The finished moisture levels of S1, S2, and the EZ Peel Nojax^{®} was 31 wt.%, and the final interior oil content was less than 30 mg/100in² for the EZ Peel Nojax^{®}, while it was about 350 mg/100in² for Sample 1 and 230 mg/100in² for Sample 2.

The oil-based flavorant, Grillin Chefs Grill flavor was emulsified into the shirring solution, which was sprayed into the Nojax^{®} casing to a loading of the shirring solution of about 768 mg/100 inches² for Sample 1 and about 623 mg/100 inches² for Sample 2, simultaneously shirred into sticks, allowed to equilibrate up to 12 hours, and then stuffed. The finished shirred Sample 1 and Sample 2 casing sticks had poor cohesion. EZ Peel Nojax^{®} comparison casing had good coherency.

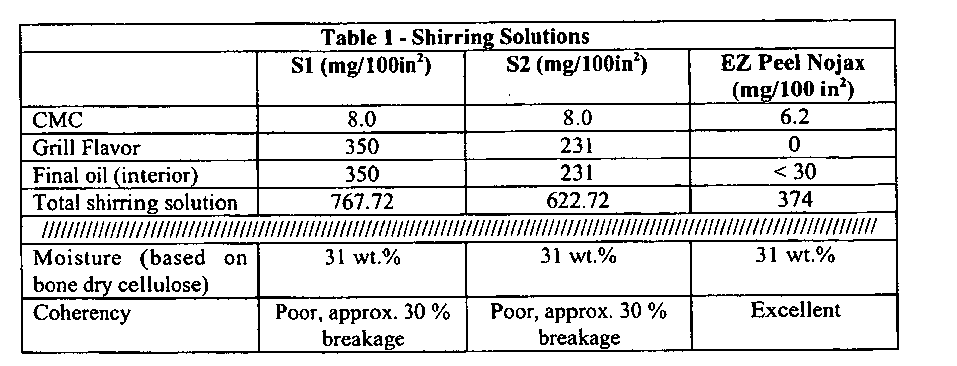

The Sample 1 and Sample 2 casing were stuffed with a chicken emulsion to produce chicken franks. Because of the poor stick cohesion, the casings had to be carefully hand fed to the automated stuffing machine, which still produced about 30 % stick breakage. Both sets of samples were cooked and processed under two conditions, one with liquid smoke and the other without liquid smoke. The processed frank samples were peeled and then sliced for tasting. Results of the taste test are shown in Table 2 below.

**Table 2 - Taste Test Results**

| **Sample** | **Description** | **Results -Tastes/Visual Reported** |
|---|---|---|
| S1, no smoke | High level spice coating on casing | Bitter taste, no color, some peeling problems |
| S2, no smoke | Low level spice coating on casing | Acceptable flavor, no color, some peeling problems |
| S1, smoked | High level spice coating on casing | Good flavor, good color, no peeling problems |
| S2, smoked | Low level spice coating on casing | Smoky flavor, good color, no peeling problems |

The most preferred chicken frank was the one having the highest loading of flavorant, while being processed with liquid smoke. Processing the franks with liquid smoke produced franks with a outer skin layer, which contributed to the good peeling seen.

### Example 2. High CMC Flavor Release Casings.

Three sets (Samples 3-5) of Grill Flavored flavor release casings were made using the compositions described herein (see Table 3). The casings used were the same Nojax^{®} casings as used in Example 1. The test casings were prepared as in Example 1, except that the bone dry moisture content of the casings was reduced to 27 wt.% in each case. Additionally, in Sample 3, the CMC concentration was raised to about 14 mg/100 in², and the Grillin Chefs Grill flavor was the same concentration as the high level casing in Example 1. Sample 4 had the same high concentration level of Grillin Chefs Grill flavor as in Example 1. In Sample 5, the CMC concentration was dropped to 12 mg/100 in², while having the Grillin Chefs Grill flavor at 250 mg/100 in². These three Samples had CMC levels that were at or above twice the concentration as that found in the comparative Nojax^{®} sample and oil levels that were 8 to approximately 12 times greater than the Nojax^{®} casing.

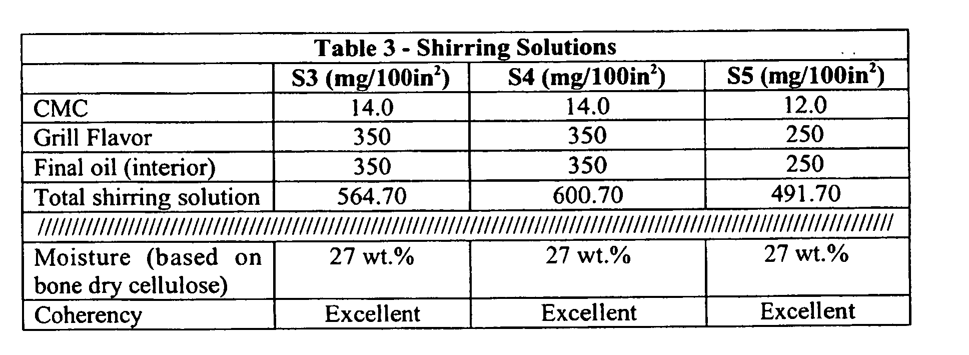

Three samples of each casing were then evaluated for coherency parameters with the following averaged results:

**Table 4 - Coherency**

| **Test** | **S3** | **S4** | **S5** | **Nojax*** |
|---|---|---|---|---|
| 1 Day After Shirring Length (inches) | 12.96 | 12.82 | 12.81 | 14.0 (Maximum) |
| 1 Day After Shirring Horn Fit (mils) | 583 | 587 | 583 | 530 (Minimum) |
| 1 Day After Shirring Coherence(inch-lbs) | 2.07 | 2.20 | 2.80 | 1.2 (Minimum) |
| 7 Day After Shirring Length (inches) | 13.35 | 12.90 | - | 14.0 (Maximum) |
| 7 Day After Shirring Horn Fit (mils) | 570 | 580 | - | 530 (Minimum) |
| 7 Day After Shirring Coherence (inch-lbs) | 1.50 | 2.03 | - | 1.2 (Minimum) |
| * Nojax comparison with no flavorings. | | | | |

The 1 and 7 days after shirring length measurement is a gauge of the coherency of the shirred stick, in that the shirred casing stick expands as it equilibrates. The length of the stick is made in inches at one day and at seven days after being shirred. When too much oil and not enough CMC is used during manufacture, the length will increase outside desired specifications. The No-jax^{®} comparison sample gives the acceptable results for a comparable commercial casing. All three samples, at one day, and S3 and S4 at seven days, were within acceptable limits. S5 was not measured at 7 days.

The 1 and 7 day after shirring horn fit is a measurement of the bore hole of the casing, which will decrease as the stick expands due to unacceptable size growth. A measurement of the hole is made in mils at one day and at seven days after shirring. The Nojax^{®} comparison sample gives the acceptable results for a comparable commercial casing. All three samples, at day one and samples S3 and S4 at seven days, were within acceptable limits. S5 was not measured at 7 days.

Coherency of a casing stick is determined by measuring the bending moment in inch-pounds at the breaking of a stick. A casing stick is cradled on two V-notched support brackets secured on a base plate and spaced apart a distance (D) about 80 % to 90 % of the length of the casing stick being tested. A pressure member having V-notched struts spaced apart a distance of D less 4 inches is centrally lowered onto the top of the casing stick. A downward pressure is provided by a manually operated handle, rack and pinion linkage to a force gauge (such as Hunter Force Indicator, Model L-IM with a "Hold at Maximum Device") that is secured centrally to the pressure member. The force is increasingly applied until the casing stick breaks. The force reading P in pounds is noted. The bending moment in inch pounds at break on the apparatus is equal to P/2 X 2 inches, and thus the force reading P equates to inch-pounds of bending moment to break the casing stick. In general, a coherency of at least about 1.0 inch pound is required and a coherency of at least about 2.5 inch-pounds is especially suitable and preferred.

All three samples, at day one and samples S3 and S4 at seven days, were within acceptable limits. S5 was not measured at 7 days.

### Example 3. High CMC Levels of Flavor Release Casing.

Casings were made as in Examples 1 and 2 above, with the use of a "hot and spicy" flavor formulation used in the shirring solution. The CMC level was at 9.00 mg/100 in², and the hot and spicy flavorant was at 80.0 mg/100 in². The shirred sticks were tested for coherency as above, with a result of all sticks being greater than 1.2 inch-pounds, and therefore falling within commercially acceptable levels.

These results show that even with the addition of the large amount of oil in the oil-containing flavorant, the addition of increased concentrations of cellulose ether peeling aids, aided with lower moisture levels, produced acceptable stick ranges for each parameter, as compared to the untreated commercial Nojax^{®} standard casing sticks.

## Claims

1. A food casing comprising a shirred, nonfibrous casing with an internal food-contacting surface having an aqueous coating on said internal food-contacting surface comprising a mixture of at least one concentrated spice extract oil and at least one peeling aid.

2. A food casing according to claim 1, wherein said coating additionally comprises an aqueous shirr solution.

3. A food casing according to claim 1 or 2, wherein said food casing has a bone dry cellulose moisture content below approximately 31 weight %.

4. A food casing according to any of claims 1 to 3, wherein said casing is selected from the group consisting of cellulose, thermoplastic, and collagen, being monolayer or multilayer, and wherein said internal food-contacting surface is absorbent.

5. A food casing according to any of claims 1 to 4, wherein said concentrated spice extract oil is selected from the group consisting of black pepper, allspice, basil, bay leaf, cardamom, cloves, ginger, mace, garlic, nutmeg, mustard, paprika, pimento, cayenne pepper, white pepper, caraway, coriander, celery seed, cumin, marjoram, thyme, savory, sage, anise, cinnamon, capsicum, onion, garlic, sesame, fennel, and mixtures thereof.

6. A food casing according to any of claims 1 to 5, wherein said concentrated spice extract oil is present in a concentration from about 10 weight % to about approximately 80 weight % of a shirring solution and in an amount effective to flavor a foodstuff encased therein during cooking or pasteurization.

7. A food casing according to any of claims 1 to 6, wherein said concentrated spice extract oil is present in a concentration from about 10 weight % to about 50 weight % of a shirring solution and in an amount effective to flavor a foodstuff encased therein during cooking or pasteurization.

8. A food casing according to any of claims 1 to 7, wherein said peeling aid is selected from the group consisting of a cellulose ether, a starch, and mixtures thereof.

9. A food casing according to claim 8, wherein said peeling aid is a cellulose ether.

10. A food casing according to claim 9, wherein said cellulose ether is present in a concentration of from about 0,45 mg/cm² (0.07 mg/square inch) of casing surface to about 1,3 mg/cm² (0.20 mg/square inch) of casing surface.

11. A food casing according to claim 9, wherein said cellulose ether is present in a concentration of from about 0,59 mg/cm² (0.09 mg/square inch) of casing surface to about 0,9 mg/cm² (0.14 mg/square inch) of casing surface.

12. A food casing according to claim 1 comprising a shirred casing selected from the group consisting of nonfibrous cellulose, thermoplastic, collagen, and mixtures thereof, being monolayer or multilayer, having a food-contacting internal surface coating with a shirring solution comprising a mixture of at least one concentrated spice extract oil at concentrations of from about 10 weight % to about 50 weight % of said shirring solution and in an amount effective to flavor a foodstuff encased therein during cooking or pasteurization, and a peeling aid in an amount effective to maintain coherency in said shirred casing.

13. A food casing according to claim 12, wherein said peeling aid comprises a cellulose ether in a concentration of from about 0,45 mg/cm² (0.07 mg/square inch) of casing surface to about 1,3 mg/cm² (20 mg/square inch) of casing surface.

14. A food casing according to claim 13, wherein said food casing has a bone dry cellulose moisture content below approximately 31 weight %.

15. A process for producing foodstuffs having multiple flavors comprising:
a) providing a raw foodstuff for processing;
b) delivering a first flavor-releasing food casing having an internal coating comprising, in an amount effective to flavor the outer surface of said foodstuff upon encasing and processing, an aqueous emulsion or dispersion of at least one concentrated spice extract oil and a peeling aid in a concentration that produces a coherent shirred casing stick;
c) stuffing said foodstuff into said first food casing;
d) delivering a second flavor-releasing food casing having an internal coating comprising, in an amount effective to flavor the outer surface of said foodstuff upon encasing and processing, an aqueous emulsion or dispersion of at least one concentrated spice extract oil that provides a different flavor than does the first flavor and a peeling aid in a concentration that produces a coherent shirred casing stick;
e) stuffing said foodstuff into said second flavor-releasing food casing;
f) processing said encased foodstuff of c) and e) by cooking or pasteurizing; and
g) optionally removing said casing from the resulting uniformly flavored foodstuff, thereby producing multiple flavored foodstuffs.

16. A process according to claim 15, wherein said foodstuff is selected from the group consisting of a sausage mixture of coarsely-ground meats, a meat emulsion, cheese, processed vegetables and processed soybeans.

17. Use of a food casing according to any of claims 1 to 14 for transferring a flavor to a foodstuff surface and/or for providing a foodstuff with a flavor by contacting said foodstuff surface with the internal surface of said food casing.

18. Foodstuff article, said foodstuff article being packaged in a food casing according to any of claims 1 to 14.

## Patentansprüche

1. Nahrungsmittelhülle, umfassend eine geraffte (gekräuselte), nichtfaserige Hülle mit einer inneren, mit einem Nahrungsmittel in Kontakt stehenden Oberfläche mit einer wäßrigen Beschichtung auf der inneren, mit einem Nahrungsmittel in Kontakt stehenden Oberfläche, wobei die wäßrige Beschichtung eine Mischung mindestens eines konzentrierten Gewürzextraktöls und mindestens eines Schälmittels aufweist.

2. Nahrungsmittelhülle nach Anspruch 1, wobei die Beschichtung zusätzlich eine wäßrige Rafflösung (Kräusellösung) umfaßt.

3. Nahrungsmittelhülle nach Anspruch 1 oder 2, wobei die Nahrungsmittelhülle einen knochentrockenen Cellulosefeuchtigkeitsgehalt von weniger als etwa 31 Gew.-% aufweist.

4. Nahrungsmittelhülle nach einem der Ansprüche 1 bis 3, wobei die Hülle ausgewählt ist aus der Gruppe von Cellulose, Thermoplasten und Kollagen, wobei die Hülle einschichtig oder mehrschichtig ist, und wobei die innere, mit einem Nahrungsmittel in Kontakt stehende Oberfläche absorbierend ist.

5. Nahrungsmittelhülle nach einem der Ansprüche 1 bis 4, wobei das konzentrierte Gewürzextraktöl ausgewählt ist aus der Gruppe von schwarzem Pfeffer, Piment (Nelkenpfeffer), Basilikum (Basilienkraut), Lorbeer, Kardamom, Nelke, Ingwer, Muskat, Knoblauch, Muskatnuß, Senf, Paprika, Piment, Cayennepfeffer, weißem Pfeffer, Kümmel, Koriander, Sellerie, Kreuzkümmel, Marjoran, Thymian, Bohnenkraut, Salbei, Anis, Zimt, Kapsikum, Zwiebeln, Knoblauch, Sesam, Fenchel und deren Mischungen.

6. Nahrungsmittelhülle nach einem der Ansprüche 1 bis 5, wobei das konzentrierte Gewürzextraktöl in einer Konzentration von etwa 10 Gew.-% bis etwa 80 Gew.-% der Rafflösung und in einer wirksamen Menge, um ein darin verpacktes Nahrungsmittel während des Kochens oder der Pasteurisation mit Geschmack bzw. Aroma zu versehen, vorhanden ist.

7. Nahrungsmittelhülle nach einem der Ansprüche 1 bis 6, wobei das konzentrierte Gewürzextraktöl in einer Konzentration von etwa 10 Gew.-% bis etwa 50 Gew.-% der Rafflösung und in einer wirksamen Menge, um ein darin verpacktes Nahrungsmittel während des Kochens oder der Pasteurisation mit Geschmack bzw. Aroma zu versehen, vorhanden ist.

8. Nahrungsmittelhülle nach einem der Ansprüche 1 bis 7, wobei das Schälmittel ausgewählt ist aus der Gruppe von Celluloseethern, Stärke und deren Mischungen.

9. Nahrungsmittelhülle nach Anspruch 8, wobei das Schälmittel ein Celluloseether ist.

10. Nahrungsmittelhülle nach Anspruch 9, wobei der Celluloseether in einer Konzentration von etwa 0,45 mg/cm² der Hülleoberfläche (0,07 mg/inch²) bis etwa 1,3 mg/cm² der Hülleoberfläche (0,20 mg/inch²) vorhanden ist.

11. Nahrungsmittelhülle nach Anspruch 9, wobei der Celluloseether in einer Konzentration von etwa 0,59 mg/cm² der Hülleoberfläche (0,09 mg/inch²) bis etwa 0,9 mg/cm² der Hülleoberfläche (0,14 mg/inch²) vorhanden ist.

12. Nahrungsmittelhülle nach Anspruch 1, umfassend eine geraffte (gekräuselte) Hülle, ausgewählt aus der Gruppe von nichtfaseriger Cellulose, Thermoplasten, Kollagen und deren Mischungen, wobei die Hülle einschichtig oder mehrschichtig ausgebildet ist und auf der mit einem Nahrungsmittel in Kontakt stehenden inneren Oberfläche eine Beschichtung mit einer Rafflösung aufweist, welche eine Mischung von mindestens einem konzentrierten Gewürzextraktöl mit Konzentrationen von etwa 10 Gew.-% bis etwa 50 Gew.-% der Rafflösung und in einer Menge, die wirksam ist, um ein darin verpacktes Nahrungsmittel während des Kochens oder der Pasteurisierung mit Geschmack bzw. Aroma zu versehen, und ein Schälmittel in einer Menge, die wirksam ist, um die Kohärenz bzw. den Zusammenhalt in der gerafften Hülle aufrechtzuerhalten, aufweist.

13. Nahrungsmittelhülle nach Anspruch 12, wobei das Schälmittel einen Celluloseether in einer Konzentration von etwa 0,45 mg/cm² der Hülleoberfläche (0,07 mg/inch²) bis etwa 1,3 mg/cm² der Hülleoberfläche (0,20 mg/inch²) umfaßt.

14. Nahrungsmittelhülle nach Anspruch 13, wobei die Nahrungsmittelhülle einen knochentrockenen Cellulosefeuchtigkeitsgehalt von weniger als etwa 31 Gew.-% aufweist.

15. Verfahren zur Herstellung von Nahrungsmitteln mit vielfachen Aromen bzw. vielfachem Geschmack, umfassend:
a) Bereitstellung eines Rohnahrungsmittels zur Verarbeitung;
b) Bereitstellung einer ersten geschmacks- bzw. aromafreisetzenden Nahrungsmittelhülle mit einer inneren Beschichtung, welche in einer wirksamen Menge, um die äußere Oberfläche des Nahrungsmittels beim Verpacken und Verarbeiten mit Geschmack bzw. Aromen zu versehen, eine wäßrige Emulsion oder Dispersion mindestens eines konzentrierten Gewürzextraktöls und ein Schälmittel in einer Konzentration, welche einen kohärenten bzw. zusammenhängenden gerafften Hüllehohlstab erzeugt, aufweist;
c) Stopfen des Nahrungsmittels in die erste Nahrungsmittelhülle;
d) Bereitstellung einer zweiten geschmacks- bzw. aromafreisetzenden Nahrungsmittelhülle mit einer inneren Beschichtung, welche in einer wirksamen Menge, um die äußere Oberfläche des Nahrungsmittels beim Verpacken und Verarbeiten mit Geschmack bzw. Aromen zu versehen, eine wäßrige Emulsion oder Dispersion mindestens eines konzentrierten Gewürzextraktöls, welches einen anderen Geschmack bzw. ein anderes Aroma als der erste Geschmack bzw. das erste Aroma bereitstellt, und ein Schälmittel in einer Konzentration, welche einen kohärenten bzw. zusammenhängenden gerafften Hüllehohlstab erzeugt, aufweist;
e) Stopfen des Nahrungsmittels in die zweite geschmack- bzw. aromafreisetzende Nahrungsmittelhülle;
f) Verarbeiten des verpackten Nahrungsmittels gemäß c) und e) durch Kochen oder Pasteurisieren; und
g) gegebenenfalls Entfernen der Hülle von dem resultierenden, einheitlich mit Geschmack bzw. Aromen versehenen Nahrungsmittel, so daß hierdurch ein Nahrungsmittel mit mehrfachen Aromen bzw. mehrfachem Geschmack erzeugt wird.

16. Verfahren nach Anspruch 15, wobei das Nahrungsmittel ausgewählt ist aus der Gruppe von Wurstmischungen von grobgemahlenem Fleisch (grobem Gehacktem), Fleischemulsionen, Käse, verarbeitetem Gemüse und verarbeiteten Sojabohnen.

17. Verwendung einer Nahrungsmittelhülle nach einem der Ansprüche 1 bis 14 zum Übertragen eines Aromas bzw. Geschmacks auf eine Nahrungsmitteloberfläche und/oder zur Bereitstellung eines Nahrungsmittels mit einem Aroma bzw. Geschmack durch Inkontaktbringen der Nahrungsmitteloberfläche mit der inneren Oberfläche der Nahrungsmittelhülle.

18. Nahrungsmittel, wobei das Nahrungsmittel verpackt ist in einer Nahrungsmittelhülle nach einem der Ansprüche 1 bis 14.

## Revendications

1. Enveloppe à aliments qui comprend une enveloppe non fibreuse froncée dont la surface intérieure est en contact avec les aliments, ladite surface intérieure en contact avec les aliments étant dotée d'un revêtement aqueux qui contient un mélange constitué d'au moins une huile qui contient un extrait concentré d'épices et d'au moins un auxiliaire de décollement.

2. Enveloppe à aliments selon la revendication 1, dans laquelle ledit revêtement contient en outre une solution aqueuse de fronçage.

3. Enveloppe à aliments selon les revendications 1 ou 2, dans laquelle ladite enveloppe à aliments présente une cellulose séchée à coeur dont la teneur en humidité est inférieure à environ 31 % en poids.

4. Enveloppe à aliments selon l'une quelconque des revendications 1 à 3, dans laquelle ladite enveloppe est sélectionnée dans l'ensemble constitué de la cellulose, des thermoplastiques et du collagène et est en une couche ou en plusieurs couches, ladite surface intérieure en contact avec les aliments étant absorbante.

5. Enveloppe à aliments selon l'une quelconque des revendications 1 à 4, dans laquelle ladite huile à extrait concentré d'épices est sélectionnée dans l'ensemble constitué du poivre noir, des quatre épices, du basilic, des feuilles de laurier, de la cardamome, des clous de girofle, du gingembre, du macis, de l'ail, de la noix de muscade, de la moutarde, du paprika, du piment, du poivre de Cayenne, du poivre blanc, du cumin, du coriandre, des graines de céleri, du carvi, de la marjolaine, du thym, de la sarriette, de la sauge, de l'anis, de la cannelle, du piment, des oignons, de l'ail, du sésame, du fenouil et de leurs mélanges.

6. Enveloppe à aliments selon l'une quelconque des revendications 1 à 5, dans laquelle ladite huile à extrait concentré d'épices est présente à une concentration d'environ 10 % en poids à environ 80 % en poids de la solution de fronçage et en une quantité efficace pour aromatiser les aliments qui y sont contenus pendant la cuisson ou la pasteurisation.

7. Enveloppe à aliments selon l'une quelconque des revendications 1 à 6, dans laquelle ladite huile à extrait concentré d'épices est présente à une concentration d'environ 10 % en poids à environ 50 % en poids d'une solution de fronçage et en quantité efficace pour aromatiser les aliments qui y sont contenus pendant la cuisson ou la pasteurisation.

8. Enveloppe à aliments selon l'une quelconque des revendications 1 à 7, dans laquelle ledit auxiliaire de décollement est sélectionné dans l'ensemble constitué des éthers de cellulose, des amidons et de leurs mélanges.

9. Enveloppe à aliments selon la revendication 8, dans laquelle ledit auxiliaire de décollement est un éther de cellulose.

10. Enveloppe à aliments selon la revendication 9, dans laquelle ledit éther de cellulose est présent à une concentration d'environ 0,45 mg/cm² (0,07 mg/pouce carré) de surface de l'enveloppe à environ 1,3 mg/cm² (0,20 mg/pouce carré) de surface de l'enveloppe.

11. Enveloppe à aliments selon la revendication 9, dans laquelle ledit éther de cellulose est présent à une concentration comprise entre environ 0,59 mg/cm² (0,09 mg/pouce carré) de surface de l'enveloppe à environ 0,9 mg/cm² (0,14 mg/pouce carré) de surface de l'enveloppe.

12. Enveloppe à aliments selon la revendication 1, qui comprend une enveloppe froncée sélectionnée dans l'ensemble constitué de la cellulose non fibreuse, des thermoplastiques, du collagène et de leurs mélanges, en une couche ou en plusieurs couches, avec sur sa surface intérieure en contact avec les aliments un revêtement par une solution de fronçage qui contient un mélange constitué d'au moins une huile à extrait concentré d'épices à des concentrations comprises entre environ 10 % en poids et environ 50 % en poids de ladite solution de fronçage et en quantité efficace pour aromatiser les aliments qui y sont placés pendant la cuisson ou la pasteurisation, ainsi qu'un auxiliaire de décollement en quantité efficace pour maintenir l'intégrité de ladite enveloppe froncée.

13. Enveloppe à aliments selon la revendication 12, dans laquelle ledit auxiliaire de décollement comporte un éther de cellulose à une concentration d'environ 0,45 mg/cm² (0,07 mg/pouce carré) de surface de l'enveloppe à environ 1,3 mg/cm² (0,20 mg/pouce carré) de surface de l'enveloppe.

14. Enveloppe à aliments selon la revendication 13, dans laquelle ladite enveloppe à aliments présente une cellulose séchée à coeur dont la teneur en humidité est inférieure à environ 31 % en poids.

15. Procédé de production d'aliments qui présentent plusieurs arômes, lequel procédé comporte les étapes qui consistent à :
a) prévoir des aliments bruts destinés à être traités,
b) fournir pour les aliments une enveloppe qui libère un premier arôme et dotée d'un revêtement intérieur qui contient en une quantité efficace pour aromatiser la surface extérieure desdits aliments lors du conditionnement et du traitement une émulsion ou dispersion aqueuse d'au moins une huile à extrait concentré d'épices et un auxiliaire de décollement à une concentration qui fournit un bâton d'enveloppe froncée continue,
c) remplir ladite enveloppe pour aliments par lesdits aliments,
d) fournir une deuxième enveloppe pour aliments à libération d'arôme dotée d'un revêtement intérieur qui contient une émulsion ou dispersion aqueuse d'au moins une huile à extrait concentré d'épices qui donne un arôme différent du premier arôme en une quantité efficace pour aromatiser la surface extérieure desdits aliments lorsqu'ils y sont placés et traités et un auxiliaire de décollement à une concentration qui fournit un bâton d'enveloppe froncée continue,
e) remplir ladite deuxième enveloppe pour aliments à libération d'arôme par lesdits aliments,
f) traiter lesdits aliments enveloppés des étapes c) et e) par cuisson ou pasteurisation et
g) facultativement, retirer ladite enveloppe des aliments uniformément aromatisés ainsi obtenus pour ainsi produire plusieurs aliments aromatisés.

16. Procédé selon la revendication 15, dans lequel lesdits aliments sont sélectionnés dans l'ensemble constitué des mélanges pour saucisses constitués de viandes grossièrement hachées, d'une émulsion de viande, de fromage, de légumes traités et de graines de soya traitées.

17. Utilisation d'une enveloppe pour aliments selon l'une quelconque des revendications 1 à 14 pour transférer un arôme à la surface d'aliments et/ou pour fournir des aliments dotés d'un arôme en mettant en contact la surface desdits aliments avec la surface intérieure de ladite enveloppe pour aliments.

18. Aliment, ledit aliment étant emballé dans une enveloppe pour aliments selon l'une quelconque des revendications 1 à 14.
